# EUROPÄISCHE PATENTSCHRIFT

(11) **EP 3 609 380 B1**
(45) Veröffentlichungstag und Bekanntmachung des Hinweises auf die Patenterteilung: **30.11.2022**
(21) Anmeldenummer: 17720018.5
(22) Anmeldetag: 11.04.2017
(51) Int. Cl.: A47L 7/00, A47L 9/16

(54) **ZYKLONVORABSCHEIDER UND ANORDNUNG**
CYCLONE PRE-SEPARATOR AND ARRANGEMENT
PRÉ-SÉPARATEUR À CYCLONE ET DISPOSITIF

(43) Veröffentlichungstag der Anmeldung: 19.02.2020
(73) Patentinhaber: Festool GmbH, 73240 Wendlingen (DE)
(72) Erfinder: GREBING, Gerhard, 72622 Nürtingen (DE)
(74) Vertreter: Patentanwälte Magenbauer & Kollegen Partnerschaft mbB
(86) Internationale Anmeldenummer: PCT/EP2017/058693
(87) Internationale Veröffentlichungsnummer: WO 2018/188736

(56) Entgegenhaltungen:
- EP-A2- 2 829 209
- WO-A1-98/35602
- WO-A1-2008/146952
- US-A- 4 934 017
- US-A1- 2009 178 233

## Beschreibung

Die Erfindung betrifft einen Zyklonvorabscheider zum Aufsetzen auf einen Partikelauffangbehälter, umfassend ein kistenförmiges Gehäuse und eine im Gehäuse angeordnete Zykloneinheit, die über einen Lufteinlass, einen Luftauslass und einen an einer Unterseite des Zyklonvorabscheiders angeordneten Partikelauslass verfügt, wobei das Gehäuse über einen mit dem Lufteinlass in Verbindung stehenden Lufteinlass-Schlauchanschluss und einen mit dem Luftauslass in Verbindung stehenden Luftauslass-Schlauchanschluss verfügt, sowie über untere Gehäuse-Kopplungsmittel, die dazu ausgebildet sind, in einem Zustand, in dem der Zyklonvorabscheider auf dem Partikelauffangbehälter aufgesetzt ist, eine lösbare, vertikal zugfeste Kopplung mit dem Partikelauffangbehälter bereitzustellen.

Ein Zyklonvorabscheider wird typischerweise vor ein Sauggerät geschaltet, so dass der von dem Sauggerät angesaugte Luftstrom zuerst den Zyklonvorabscheider und dann das Sauggerät durchläuft. Auf diese Weise kann erreicht werden, dass bereits im Zyklonvorabscheider ein Großteil der in dem Luftstrom enthaltenen Partikel abgeschieden wird, so dass weniger Partikel in das Sauggerät befördert werden. Dies ist insbesondere dann von Vorteil, wenn das Sauggerät über einen Beutel und/oder Filter verfügt, an dem Partikel abgeschieden werden und der bei einem bestimmten Füllgrad/Verschmutzungsgrad zu wechseln ist. Dadurch, dass ein Großteil der Partikel bereits von dem Zyklonvorabscheider aus dem Luftstrom entfernt werden, erfolgt die Füllung/Verschmutzung des Beutels/Filters langsamer, so dass er weniger häufig ausgewechselt werden muss bzw. länger genutzt werden kann.

Zyklonvorabscheider werden insbesondere im Handwerksbereich eingesetzt, wo sie vor die dort gängigen Beutel-Sauggeräte geschaltet werden, um den vorgenannten Vorteil einer längeren Nutzbarkeit des Beutels zu erzielen.

So ist beispielsweise von dem Unternehmen "Oneida Air Systems" unter der Produktbezeichnung "Ultimate Dust Deputy" ein Zyklonvorabscheider erhältlich, der vor ein im Handwerksbereich gängiges Beutel-Sauggerät geschaltet werden kann. Dieser Zyklonvorabscheider verfügt über einen Lufteinlass-Schlauchanschluss, einen Luftauslass-Schlauchanschluss und einen Partikelauslass. Der Zyklonvorabscheider verfügt über eine kegelförmige Grundgestalt und ist über Schraubverbindungen an einer Abdeckung eines Partikelauffangbehälters anbringbar.

Die WO 98/35602 beschreibt einen Staubsauger, in dem ein Zyklonseparator angeordnet ist. Der Zyklonseparator weist einen Einlassteil, einen Aulassteil und einen Zyklonteil auf. Der Zyklonteil umfasst ein zylindrisches Zyklongehäuse. Ein Kragen-förmiger Teil des Zyklongehäuses ruht auf der oberen Kante eines Sammelbehälters und wird daran mittels mehrerer Klemmen gehalten.

Eine Aufgabe der Erfindung besteht darin, den eingangs genannten Zyklonvorabscheider so zu modifizieren, dass er besser handhabbar ist. Die Aufgabe wird dadurch gelöst, dass das Gehäuse des Zyklonvorabscheiders kistenförmig ausgestaltet ist.

Dadurch, dass das Gehäuse des Zyklonvorabscheiders kistenförmig ausgestaltet ist, kann der Zyklonvorabscheider besser gehandhabt werden. Dies gilt insbesondere im Handwerksbereich, wo Werkzeug und andere benötigte Gegenstände häufig in Systemkisten aufbewahrt werden, die aufeinander gestapelt werden können und dadurch gut transportierbar und verstaubar sind. Aufgrund seiner kistenförmigen Ausgestaltung ist es möglich, auf den erfindungsgemäßen Zyklonvorabscheider Systemkisten zu stapeln, so dass der erfindungsgemäße Zyklonvorabscheider besser verstaubar und besser transportierbar ist.

Mit dem Begriff "kistenförmig" ist insbesondere eine im Wesentlichen quaderförmige Gestalt gemeint. Ferner ist mit "kistenförmig" eine Form gemeint, deren Oberseite derart ausgestaltet ist, dass ein weiterer kistenförmiger oder quaderförmiger Körper, insbesondere eine Systemkiste, auf die Oberseite aufstapelbar ist. Beispielsweise ist mit "kistenförmig" eine Form gemeint, deren Oberseite und Umfangswände orthogonal zueinander ausgerichtet sind.

Der Ausdruck "lösbare Kopplung" meint insbesondere eine Kopplung, die werkzeuglos und reversibel hergestellt und gelöst werden kann, beispielsweise eine Kopplung unter Beteiligung eines manuell betätigbaren Drehriegels oder einer manuell betätigbaren Verriegelungslasche. Mit dem Ausdruck "vertikal zugfeste Kopplung" soll insbesondere eine in Vertikalrichtung kraftübertragende Kopplung gemeint sein, die zweckmäßigerweise bei den im Gebrauch bzw. beim Transport des Zyklonvorabscheiders auftretenden vertikalen Kräften stabil bleibt. Im Kontext des Zykonvorabscheiders und des Partikelauffangbehälters soll mit "vertikal zugfester Kopplung" insbesondere eine Kopplung gemeint sein, die es ermöglicht, durch Anheben des Zyklonvorabscheider einen an den Zyklonvorabscheider vertikal zugfest gekoppelten Partikelauffangbehälter mitanzuheben. Zweckmäßigerweise handelt es sich bei einer "vertikal zugfeste Kopplung" um eine Kopplung, die in mehrere, vorzugsweise in alle, Raumrichtungen zugfest bzw. stabil kraftübertragend ist.

Zweckmäßigerweise handelt es sich bei dem Zyklonvorabscheider um eine rein passive Vorrichtung. Insbesondere benötigt der Zyklonvorabscheider für die Abscheidung von Partikeln keine Stromversorgung. Vorzugsweise verfügt der Zyklonvorabscheider über keine eigene Saugeinheit.

Vorteilhafte Weiterbildungen sind Gegenstand der Unteransprüche.

Vorzugsweise verfügt das Gehäuse über obere Gehäuse-Kopplungsmittel, die insbesondere ein beweglich gelagertes Verriegelungselement umfassen. Die oberen Gehäuse-Kopplungsmittel sind zweckmäßigerweise dazu ausgebildet, in einem Zustand, in dem ein kistenförmiger Körper auf das Gehäuse gestapelt ist, eine lösbare, vertikal zugfeste Kopplung mit dem kistenförmigen Körper bereitzustellen. Auf diese Weise wird es möglich, eine auf das Gehäuse gestapelte Systemkiste vertikal zugfest an das Gehäuse zu koppeln, so dass die Systemkiste und das Gehäuse zusammen einen Stapel bilden, der stabil transportiert und verstaut werden kann.

Vorzugsweise verfügt das Gehäuse über einen abnehmbaren und/oder verschwenkbaren Deckel, der in einer Offenstellung einen Zugang zu der Zykloneinheit freigibt. Die Zykloneinheit ist somit gut zugänglich und kann schnell und einfach gewartet oder gereinigt werden.

Vorzugsweise umfassen die oberen Gehäuse-Kopplungsmittel einen Drehriegel, der an dem Deckel angeordnet ist. Zweckmäßigerweise ist der Drehriegel sowohl zur Verriegelung des Deckels als auch zur Bereitstellung der Kopplung mit dem kistenförmigen Körper ausgebildet. Insbesondere wird somit nur ein einziges beweglich gelagertes Verriegelungselement benötigt, um sowohl die Verriegelung des Deckels als auch die Kopplung mit dem kistenförmigen Körper bereitzustellen.

Vorzugsweise umfassen die unteren Gehäuse-Kopplungsmittel wenigstens ein beweglich gelagertes Verriegelungselement. Zweckmäßigerweise sind die unteren Gehäuse-Kopplungsmittel an Längsseiten des Gehäuses angeordnet. Dadurch, dass die unteren Gehäuse-Kopplungsmittel des Zyklonvorabscheiders über ein beweglich gelagertes Verriegelungselement verfügen, muss zur Bereitstellung der Kopplung kein beweglich gelagertes Verriegelungselement am Partikelauffangbehälter vorgesehen sein. Somit kann der Zyklonvorabscheider auch zusammen mit einem sehr einfachen und günstig herstellbaren Partikelauffangbehälter verwendet werden. Durch die Anordnung der Gehäuse-Kopplungsmittel an den Längsseiten des Gehäuses wird der Vorteil erzielt, dass an den Querseiten des Partikelauffangbehälters keine Kopplungsmittel vorgesehen sein müssen, so dass dort stattdessen Tragegriffe angeordnet sein können und eine gute Handhabbarkeit des Partikelauffangbehälters gewährleistet werden kann.

Vorzugsweise sind der Lufteinlass-Schlauchanschluss und der Luftauslass-Schlauchanschluss an einer der Umfangswände, insbesondere an einer Stirnseite, des Gehäuses angeordnet. Dadurch, dass die Schlauchanschlüsse an derselben Seite angeordnet sind, können die benötigten Schläuche schnell und einfach angeschlossen werden.

Vorzugsweise weist der Zyklonvorabscheider eine Steckdose auf. Zweckmäßigerweise verfügt das Gehäuse über eine Steckdosen-Aussparung zur Aufnahme eines Steckdosen-Einsatzes. Der Zyklonvorabscheider kann somit dem Anwender die Möglichkeit bieten, ein elektrisch betriebenes Gerät, beispielsweise ein Elektrowerkzeug, zur Stromversorgung an den Zyklonvorabscheider anzuschließen.

Vorzugsweise ist an der Unterseite des Zyklonvorabscheiders eine Rinne vorgesehen. Zweckmäßigerweise verläuft die Rinne entlang des äußeren Rands der Unterseite und ist insbesondere zur Aufnahme des oberen Rands des Partikelauffangbehälters ausgebildet. Auf diese Weise kann eine besonders stabile und zweckmäßigerweise auch luftdichte Kopplung zwischen dem Zyklonvorabscheider und dem Partikelauffangbehälter erzielt werden.

Vorzugsweise verfügt der Zyklonvorabscheider über einen bügelförmigen Tragegriff, der an der Oberseite des Gehäuses angeordnet ist. Mit dem Tragegriff lässt sich der Zyklonvorabscheider in der Art einer Systemkiste bequem tragen.

Die Erfindung betrifft ferner eine Anordnung aus einem Partikelauffangbehälter und einem auf dem Partikelauffangbehälter aufgesetzten Zyklonvorabscheider gemäß einer der vorstehend diskutierten Ausgestaltungen. Zweckmäßigerweise weist der Partikelauffangbehälter einen sich zu seinem Behälterboden hin verjüngenden horizontalen Querschnitt auf, so dass der Partikelauffangbehälter in einen identischen Partikelauffangbehälter stapelbar ist. Der Behälterboden ist insbesondere derart ausgestaltet, dass die Anordnung mit dem Behälterboden stabil auf eine ebene Unterlage abstellbar ist. Eine solche Kombination aus einem kistenförmigen Zyklonvorabscheider und einem ineinander stapelbaren Partikelauffangbehälter ist besonders gut handhabbar - der Zyklonvorabscheider kann auf praktische Weise in einem Stapel aus Systemkisten transportiert und verstaut werden und der Partikelauffangbehälter kann in einem Stapel aus ineinander gestapelten, identischen Partikelauffangbehältern platzsparend transportiert und verstaut werden.

Die Anordnung weist ferner eine Saugvorrichtung auf, die an ihrer Oberseite über eine Behälter-Aufnahme mit einem sich zum Aufnahmeboden hin verjüngenden horizontalen Querschnitt verfügt. Zweckmäßigerweise ist der Partikelauffangbehälter in die Behälter-Aufnahme eingesetzt und der Luftauslass-Schlauchanschluss ist über einen Schlauch mit einem Sauganschluss der Saugvorrichtung verbunden. Der Zyklonvorabscheider und der Partikelauffangbehälter können somit auf der Saugvorrichtung angeordnet sein und in praktischer Weise mit dieser zusammen transportiert werden.

Zweckmäßigerweise verfügt die Anordnung über eine/die Saugvorrichtung und ein Elektrowerkzeug. Zweckmäßigerweise verfügt der Zyklonvorabscheider über eine Steckdose. Das Elektrowerkzeug ist an der Steckdose angeschlossen und die Steckdose ist über ein Anschlusskabel an dem Sauggerät angeschlossen. Vorzugsweise ist das Sauggerät ausgebildet, ein Einschalten des Elektrowerkzeugs zu erfassen und in Ansprechen darauf beginnen zu saugen. Folglich kann bei einem an dem Zyklonvorabscheider angeschlossenen Elektrowerkzeug ein durch Betätigung des Elektrowerkzeugs automatisch ausgelöstes Saugen erfolgen.

Die Erfindung betrifft ferner eine Anordnung aus einem Adapterrahmen und einem auf dem Adapterrahmen aufgesetzten Zyklonvorabscheider gemäß einer der vorstehend diskutierten Ausgestaltungen. Der Adapterrahmen verfügt zweckmäßigerweise über eine Behälter-Aufnahme mit einem sich zum Aufnahmeboden hin verjüngenden horizontalen Querschnitt. Ferner verfügt der Adapterrahmen insbesondere über obere Adapterrahmen-Kopplungsmittel, die eine lösbare, vertikal zugfeste Kopplung mit dem Zyklonvorabscheider bereitstellen. Zweckmäßigerweise stellen die oberen Adapterrahmen-Kopplungsmittel die lösbare, vertikal zugefeste Kopplung zu den unteren Gehäuse-Kopplungsmitteln her, insbesondere zu denselben unteren Gehäuse-Kopplungsmitteln, mit denen auch die Kopplung zu dem Partikelauffangbehälter bereitgestellt werden kann. Der Adapterrahmen verfügt zudem vorzugsweise über untere Adapterrahmen-Kopplungsmittel, die dazu ausgebildet sind, in einem Zustand, in dem der Adapterrahmen auf einem Körper, insbesondere einem Sauggerät, angeordnet ist, eine lösbare, vertikal zugfeste Kopplung mit dem Körper bereitzustellen.

Eine solche Anordnung aus Adapterrahmen und Zyklonvorabscheider kann insbesondere zum Transport stabil auf einem Sauggerät angeordnet werden und mit diesem zusammen einen stabilen vertikalen Stapel bilden. Ferner kann eine solche Anordnung aus Adapterrahmen und Zyklonvorabscheider aufgrund der vorgesehenen Kopplungsmittel sowohl nach oben hin wie auch nach unten hin zur Ankopplung an eine Systemkiste ausgebildet sein. Insbesondere kann die Anordnung aus Adapterrahmen und Zyklonvorabscheider dadurch insgesamt wie eine Systemkiste gehandhabt und in einem vertikalen Stapel aus Systemkisten stabil verstaut werden.

Die Erfindung betrifft ferner eine Anordnung umfassend einen Zyklonvorabscheider gemäß einer der vorgenannten Ausgestaltungen, sowie mindestens einen kistenförmigen Körper, der auf dem Zyklonvorabscheider angeordnet ist. Zweckmäßigerweise bildet der kistenförmige Körper zusammen mit dem Zyklonvorabscheider einen vertikalen, vorzugsweise im Wesentlichen quaderförmigen Stapel. Zweckmäßigerweise verfügt der kistenförmige Körper über Körper-Kopplungsmittel, die mit den oberen Gehäuse-Kopplungsmitteln zusammenwirken, um eine lösbare, vertikal zugfeste Kopplung zwischen dem kistenförmigen Körper und dem Zyklonvorabscheider bereitzustellen.

Vorzugsweise weist der kistenförmige Körper eine Saugeinrichtung und einen Sauganschluss auf. Folglich können in demselben quaderförmigen Stapel sowohl der Zyklonvorabscheider als auch eine Saugeinrichtung untergebracht werden.

Beispielhafte Ausführungsformen werden nachstehend unter Bezugnahme auf die Zeichnung erläutert. Dabei zeigt
- Figur 1: eine perspektivische Ansicht eines Zyklonvorabscheiders von oben,
- Figur 2: eine perspektivische Ansicht des Zyklonvorabscheiders von unten,
- Figur 3: eine perspektivische Ansicht des Zyklonvorabscheiders mit geöffnetem Deckel,
- Figur 4: den Zyklonvorabscheider mit herausgenommenem Steckdosen-Einsatz,
- Figur 5: den Zyklonvorabscheider über einem Partikelauffangbehälter,
- Figur 6: eine Anordnung mit dem Zyklonvorabscheider und dem Partikelauffangbehälter,
- Figur 7: eine Anordnung mit dem Zyklonvorabscheider, dem Partikelauffangbehälter und einer Saugvorrichtung,
- Figur 8: eine Anordnung mit dem Zyklonvorabscheider und einem Adapterrahmen,
- Figur 9: eine perspektivische Ansicht des Adapterrahmens von oben,
- Figur 10: eine perspektivische Ansicht des Adapterrahmens von unten,
- Figur 11: eine Anordnung mit einem kistenförmigen Körper, dem Zyklonvorabscheider und dem Partikelauffangbehälter.

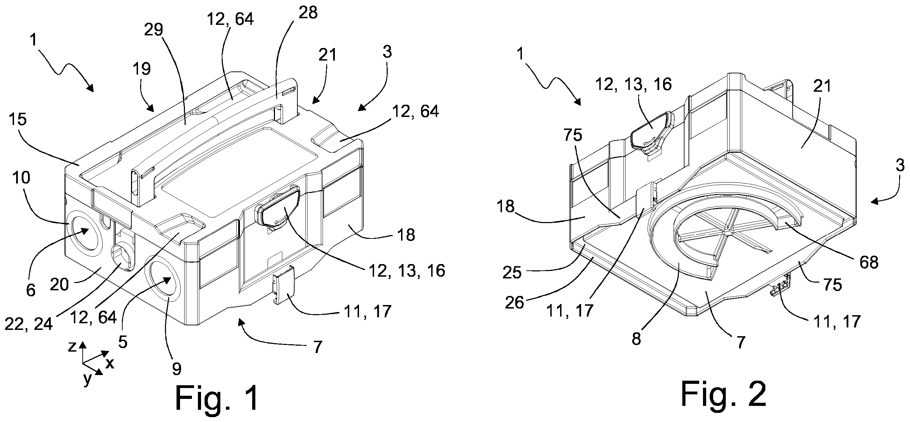

Wie in der Figur 1 gezeigt, erstreckt sich der Zyklonvorabscheider 1 in eine Vertikalrichtung, die parallel zu der eingezeichneten z-Achse verläuft, in eine Längsrichtung, die parallel zu der eingezeichneten x-Achse verläuft, und in eine Querrichtung, die parallel zu der eingezeichneten y-Achse verläuft. Die x-Achse, y-Achse und z-Achse sind orthogonal zueinander ausgerichtet.

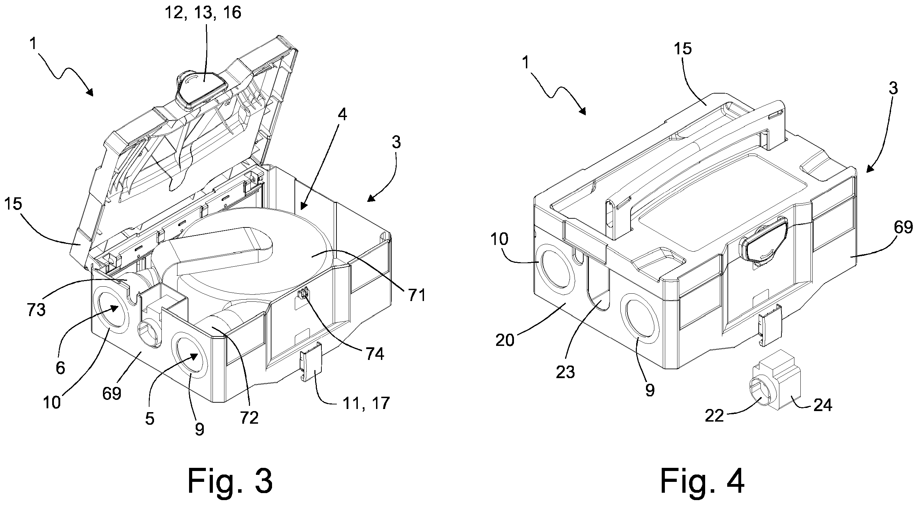

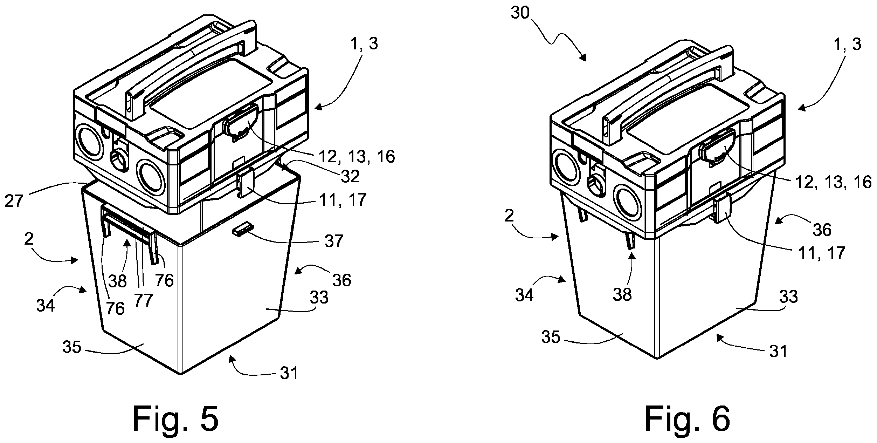

Der Zyklonvorabscheider 1 ist dazu ausgebildet, auf einen Partikelauffangbehälter 2 aufgesetzt zu werden. Der Partikelauffangbehälter 2 ist beispielsweise in der Figur 5 gezeigt. Der Zyklonvorabscheider 1 umfasst ein kistenförmiges Gehäuse 3 und eine im Gehäuse 3 angeordnete Zykloneinheit 4. Die Zykloneinheit 4 ist in der Figur 3 zu sehen. Die Zykloneinheit 4 verfügt über einen Lufteinlass 5, einen Luftauslass 6 und einen an einer Unterseite 7 des Zyklonvorabscheiders 1 angeordneten Partikelauslass 8, der in der Figur 2 gezeigt ist. Das Gehäuse 3 verfügt über einen mit dem Lufteinlass 5 in Verbindung stehenden Lufteinlass-Schlauchanschluss 9 und einen mit dem Luftauslass 6 in Verbindung stehenden Luftauslass-Schlauchanschluss 10. Ferner verfügt das Gehäuse 3 über untere Gehäuse-Kopplungsmittel 11, die dazu ausgebildet sind, in einem Zustand, in dem der Zyklonvorabscheider 1 auf dem Partikelauffangbehälter 2 aufgesetzt ist, eine lösbare, vertikal zugfeste Kopplung mit dem Partikelauffangbehälter 2 bereitzustellen.

Aufgrund seiner kistenförmigen Ausgestaltung lässt sich der Zyklonvorabscheider in einem Stapel aus weiteren kistenförmigen Körpern, wie beispielsweise Systemkisten, unterbringen und transportieren.

Nachstehend werden exemplarische Konfigurationen der einzelnen Komponenten des Zyklonvorabscheiders 1 und exemplarische, den Zyklonvorabscheider 1 umfassende Anordnungen 30, 40, 50 sowie deren Komponenten diskutiert.

Wie in der Figur 1 gezeigt, verfügt der Zyklonvorabscheider 1 über eine quaderförmige Grundgestalt. Die Höhe des Zyklonvorabscheiders 1 ist exemplarisch geringer als seine Breite und geringer als seine Länge. Zweckmäßigerweise ist die Breite des Zyklonvorabscheiders 1 geringer als seine Länge. Beispielsweise ist der Zyklonvorabscheider 1 zwischen 390 mm und 400 mm, insbesondere 396 mm, lang und zwischen 290 mm und 300 mm, insbesondere 296 mm breit. Vorzugsweise beträgt die Höhe des Zyklonvorabscheiders 1 mit eingeklapptem Tragegriff 28 weniger als 200 mm.

Das Gehäuse 3 des Zyklonvorabscheiders 1 weist vier orthogonal zueinander ausgerichtete Umfangswände 18, 19, 20, 21 auf. Die Umfangswände 18 und 19 stellen parallel zur Längsrichtung x ausgerichtete Längsseiten dar und die Umfangswände 20 und 21 stellen parallel zur Querrichtung y ausgerichtete Querseiten dar. Die Querseiten werden auch als Stirnseiten bezeichnet.

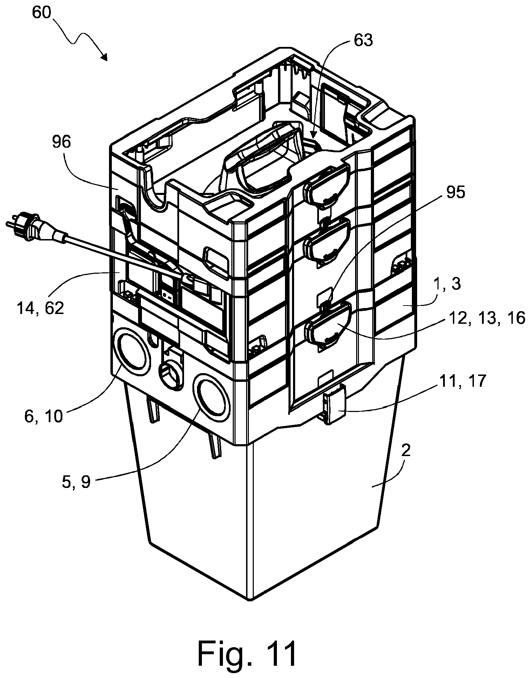

Das Gehäuse 3 verfügt über obere Gehäuse-Kopplungsmittel 12, die ein beweglich gelagertes Verriegelungselement 13 umfassen. Die oberen Gehäuse-Kopplungsmittel 12 sind dazu ausgebildet, in einem Zustand, in dem ein kistenförmiger Körper 14 auf das Gehäuse 3 gestapelt ist, eine lösbare, vertikal zugfeste Kopplung mit dem kistenförmigen Körper 14 bereitzustellen. Ein solcher Zustand, in dem ein kistenförmiger Körper 14 auf das Gehäuse 3 gestapelt ist, ist zum Beispiel in der Figur 11 gezeigt. Vorzugsweise sind die oberen Gehäuse-Kopplungsmittel 12 dazu geeignet, eine in mehrere, insbesondere sämtliche Raumrichtungen zugfeste Kopplung bereitzustellen.

Das beweglich gelagerte Verriegelungselement 13 ist exemplarisch als Drehriegel 16 ausgebildet. Zweckmäßigerweise ist das Verriegelungselement 13 an der Längsseite 18 angeordnet. Alternativ zu der gezeigten Ausführung als Drehriegel 16 kann das Verriegelungselement 13 auch als Verriegelungslasche ausgebildet sein, die schwenkbeweglich und/oder verschiebbar gelagert ist. Die Schwenkachse kann in diesem Fall zweckmäßigerweise parallel zu derjenigen Umfangswand des Zyklonvorabscheiders 1 verlaufen, an der die Verriegelungslasche angeordnet ist. Die Schiebeachse bei einer verschiebbaren Lagerung kann zweckmäßigerweise in vertikaler Richtung verlaufen.

Exemplarisch weisen die die oberen Gehäuse-Kopplungsmittel 12 ferner Eingriffsstrukturen 64 auf, die dazu geeignet sind, mit entsprechenden Eingriffsstrukturen, wie beispielsweise Standfüßen einer Systemkiste, in Eingriff gebracht zu werden. Die Eingriffsstrukturen 64 sind an der Oberseite 29 vorgesehen. Die Eingriffsstrukturen 64 sind zweckmäßigerweise statische Strukturen - also nicht-beweglich Strukturen. Zweckmäßigerweise sind die Eingriffsstrukturen 64 derart ausgebildet, dass sie zu einer vertikalen und/oder horizontalen Kopplung beitragen können. Beispielsweise können die Eingriffsstrukturen 64 hierfür Hintergreifbestandteile aufweisen.

Im gezeigten Beispiel umfassen die Eingriffsstrukturen 64 mehrere an der Oberseite 29 angeordnete Eingriffsvertiefungen, insbesondere zwei in der Nähe der vorderen Längsseite 18 angeordnete erste Eingriffsvertiefungen und eine in der Nähe der hinteren Längsseite 19 angeordnete zweite Eingriffsvertiefung. Die Eingriffsvertiefungen 64 sind derart ausgebildet, dass sie Eingriffsvorsprünge, vorzugsweise Standfüße einer Systemkiste, aufnehmen können.

Der Zyklonvorabscheider 1 gleicht insbesondere in Bezug auf seine quaderförmige Grundgestalt, seine oberen Gehäuse-Kopplungsmittel 12 und der Ausgestaltung seiner Oberseite 29 einer Systemkiste. Systemkisten eines Systems verfügen über eine in dem System definierte Grundfläche und weisen in dem System definierte Kopplungsmittel auf bzw. sind mit einem bestimmten Kopplungssystem kompatibel, so dass Systemkisten eines Systems zu einem stabilen Stapel zusammengesetzt werden können. Systemkisten sind beispielsweise als modulare Werkzeugkästen zur Aufbewahrung von handgeführtem Elektrowerkzeug, Zubehör und/oder Verbrauchmaterialen weit verbreitet. Da zumindest die quaderförmige Grundgestalt, die oberen Gehäuse-Kopplungsmittel 12 und die Oberseite 29 des Zyklonvorabscheiders 1 wie bei einer Systemkiste ausgebildet sind, kann der Zyklonvorabscheider 1 das unterste Stapelelement eines Stapels aus Systemkisten bilden und so effizient verstaut und transportiert werden.

Wie vorstehend bereits erwähnt, verfügt das Gehäuse 3 ferner über untere Gehäuse-Kopplungsmittel 11. Die unteren Gehäuse-Kopplungsmittel 11 umfassen exemplarisch zwei beweglich gelagerte Verriegelungselemente 17 und sind an Längsseiten des Gehäuses 3 vorgesehen. Zweckmäßigerweise sind die Verriegelungselemente 17 in Längsrichtung mittig an den Längsseiten angeordnet. Die Verriegelungselemente 17 sind insbesondere als Verriegelungslaschen ausgebildet, die schwenkbeweglich und/oder verschiebbar gelagert ist. Die Schwenkachse kann in diesem Fall zweckmäßigerweise parallel zu derjenigen Umfangswand 18, 19 des Zyklonvorabscheiders 1 verlaufen, an der die Verriegelungslasche angeordnet ist. Die Schiebeachse bei einer verschiebbaren Lagerung kann zweckmäßigerweise in vertikaler Richtung verlaufen. Alternativ zu der gezeigten Ausgestaltung als Verriegelungslaschen können auch ein oder beide Verriegelungselemente 17 als Drehriegel ausgebildet sein. Ferner ist es auch möglich, dass die unteren Gehäuse-Kopplungsmittel 11 nur ein beweglich gelagertes Verriegelungselement 17 aufweisen. In diesem Fall können die unteren Gehäuse-Kopplungsmittel 11 beispielsweise zusätzlich zum beweglich gelagerten Verriegelungselement über eine nicht-bewegliche Eingriffsstruktur verfügen.

Wie vorstehend bereits erwähnt, verfügt das Gehäuse 3 über einen Lufteinlass-Schlauchanschluss 9 und einen Luftauslass-Schlauchanschluss 10. Wie in der Figur 1 gezeigt, sind die beiden Schlauchanschlüsse 9, 10 an einer Stirnseite des Gehäuses 3 angeordnet, und zwar zweckmäßigerweise in Querrichtung verteilt. Exemplarisch sind beide Schlauchanschlüsse 9, 10 kreisförmig ausgestaltet.

Die Figur 2 zeigt die Unterseite 7 des Zyklonvorabscheiders 1. An der Unterseite 7 ist der Partikelauslass 8 angeordnet, der exemplarisch als Ringspalt bzw. Ringabschnittsspalt ausgebildet ist. Zweckmäßigerweise ist der Partikelauslass 8 von einem vertikal nach unten abstehenden Rand 68 umgeben.

An der Unterseite 7 ist ferner eine Rinne 25 vorgesehen, die entlang des äußeren Rands 26 der Unterseite 7 verläuft und zur Aufnahme des beispielsweise in der Figur 5 gezeigten oberen Rands 27 des Partikelauffangbehälters 7 ausgebildet ist. Die Rinne 25 umläuft den Partikelauslass 8 vollständig und hat insgesamt einen rechteckigen Verlauf. In der Rinne 25 kann zweckmäßigerweise eine umlaufende flexible Dichtung vorgesehen sein. Der äußere Rand 26 der Unterseite wird exemplarisch von den unteren Kanten der Umfangswände 18, 19, 20, 21 gebildet.

Die Umfangswände 18 und 19 - also die vordere Längsseite und die hintere Längsseite - umfassen exemplarisch jeweils einen über den sonstigen äußeren Rand 26 nach unten überstehenden Wandabschnitt 75, der in Längsrichtung mittig angeordnet ist. Die Übergänge von dem sonstigen äußeren Rand 26 zu den nach unten überstehenden Wandabschnitten 75 sind jeweils abgeschrägt. Die unteren Gehäuse-Kopplungsmittel 11 sind exemplarisch an den nach unten überstehenden Wandabschnitten 75 angeordnet. Alternativ zu der gezeigten Ausgestaltung mit den überstehenden Wandabschnitten 75 kann das Gehäuse 3 auch ohne die Wandabschnitte 75 ausgestaltet sein. Die Gehäuse-Kopplungsmittel 11 können dann beispielsweise im unteren Bereich der Umfangswände 18, 19 angeordnet sein.

Das Gehäuse 3 des Zyklonvorabscheiders 1 umfasst einen Deckel 15 und ein Unterteil 69, die jeweils den gleichen horizontalen Querschnitt aufweisen, so dass sich der Deckel 15 über die gesamte Grundfläche des Unterteils 69 erstreckt. Der Deckel 15 ist im Bereich der hinteren Längsseite 19 verschwenkbar an dem Unterteil 69 angelenkt. Die Figur 3 zeigt den Zyklonvorabscheider 1 mit einem geöffneten Deckel 15. In der Offenstellung gibt der verschwenkbare Deckel 15 einen Zugang zu der Zykloneinheit 4 frei.

Die Zykloneinheit 4 umfasst ein Lufteinlassrohr 72, einen Einlaufzylinder 71 und ein Luftauslassrohr 73. Das Lufteinlassrohr 72 stellt den Lufteinlass 5 bereit und das Luftauslassrohr 73 stellt den Luftauslass 6 bereit. Das Lufteinlassrohr 72 und das Luftauslassrohr 73 sind exemplarisch nebeneinander angeordnet und verlaufen zumindest abschnittsweise parallel zueinander. Das Lufteinlassrohr 72 stellt eine fluidische Verbindung von dem Lufteinlass-Schlauchanschluss 9 zu dem Einlaufzylinder 71 bereit. Das Luftauslassrohr 73 stellt eine fluidische Verbindung von dem Einlaufzylinder 71 zu dem Luftauslass-Schlauchanschluss 10 bereit. Die Zykloneinheit 4 ist ausgebildet, das bekannte Funktionsprinzip eines Zyklonabscheiders bzw. eines Fliehkraftabscheiders zu nutzen. Bei anliegendem Unterdruck an dem Luftauslass 6 wird ein Luftstrom durch den Lufteinlass 5 eingesaugt, durchläuft den Einlaufzylinder 71 und wird über den Luftauslass 6 ausgegeben. Der Einlaufzylinder 71 ist derart ausgebildet, dass der Luftstrom auf eine kreisförmige Bahn gelenkt wird, wobei in dem Luftstrom enthaltene Partikel durch die Fliehkraft an Wände des Einlaufzylinders 71 geschleudert werden, so dass sie abgebremst werden und schließlich aus dem Partikelauslass 8 ausgegeben werden.

Der Einlaufzylinder 71 ist mit seiner Zylinderachse exemplarisch parallel zur Vertikalrichtung ausgerichtet. Zweckmäßigerweise ist die Höhe des Einlaufzylinders 71 geringer als sein Durchmesser. Das Lufteinlassrohr 72 mündet exemplarisch in den Zylindermantel des Einlaufzylinders 71. Das Luftauslassrohr 73 ist zweckmäßigerweise zumindest teilweise über die obere Grundfläche des Einlaufzylinders 71 geführt und mündet dort in einem Zentralbereich in die obere Grundfläche ein.

Der vorstehend bereits erwähnte Drehriegel 16 ist an dem Deckel 15 angeordnet. Der Drehriegel 16 ist sowohl zur Verriegelung des Deckels 15 als auch zur Bereitstellung der Kopplung mit einem auf dem Zyklonvorabscheider 1 angeordneten kistenförmigen Körper 14 ausgebildet. Der Drehriegel 16 weist insbesondere eine T-förmige Gestalt auf und kann zweckmäßigerweise in wenigstens drei verschiedene Stellungen versetzt werden: Die Figur 3 zeigt eine erste Stellung des Drehriegels 16, in der der Drehriegel 16 nicht in Kopplungseingriff mit einem unterhalb des Drehriegels 16 an dem Unterteil 69 angeordneten Verriegelungsvorsprung 74 steht. In dieser Stellung kann der Deckel 15 geöffnet werden. Ferner kann in dieser Stellung eine Kopplung zu einem auf dem Zyklonvorabscheider 1 aufgesetzten kistenförmigen Körper 14 bereitgestellt werden. Die Figur 1 zeigt eine zweite Stellung des Drehriegels 16, in der der Drehriegel 16 in Kopplungseingriff mit dem Verriegelungsvorsprung 74 steht, jedoch keine Kopplung zu einem auf dem Zyklonvorabscheider 1 aufgesetzten kistenförmigen Körper 14 bereitstellen kann. In einer dritten, in den Figuren nicht gezeigten Stellung kann der Drehriegel 16 gleichzeitig in Kopplungseingriff mit dem Verriegelungsvorsprung 74 und einem aufgesetzten kistenförmigen Körper 14 gebracht werden.

Am Deckel 15 ist ferner ein Tragegriff 28 vorgesehen. Im gezeigten Beispiel ist der Tragegriff 28 an der Oberseite 29 des Deckels 15 angeordnet. Der Tragegriff 28 ist in vorteilhafter Weise so ausgebildet, dass er wahlweise eine an die Oberseite 29 des Deckels 15 herangeschwenkte Nichtgebrauchsstellung einnehmen kann oder eine nach oben geschwenkte und folglich nach oben über die Oberseite 29 hinausragende Gebrauchsstellung einnehmen kann. Es handelt sich vorzugsweise um einen Tragegriff 28 mit U-förmiger Gestalt.

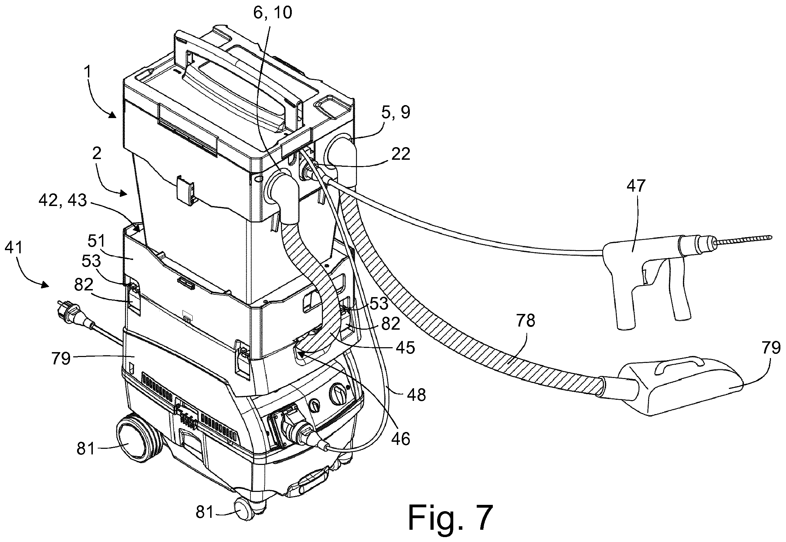

Das Gehäuse 3 weist eine Steckdosen-Aussparung 23 zur Aufnahme eines Steckdosen-Einsatzes 24 auf. In der Figur 4 ist der Steckdosen-Einsatz 24 in einem herausgenommenen Zustand gezeigt. In den anderen Abbildungen des Zyklonvorabscheiders 1 ist der Steckdosen-Einsatz 24 in die Aussparung 23 eingesetzt. Der Steckdosen-Einsatz 24 verfügt über eine Steckdose 22 und ein in der Figur 7 gezeigtes Anschlusskabel 48 mit einem Netzstecker. Die Steckdosen-Aussparung 23 ist exemplarisch an derselben Stirnseite wie die beiden Schlauchanschlüsse 9, 10 angeordnet. Zweckmäßigerweise ist die Steckdosen-Aussparung 23 zwischen den beiden Schlauchanschlüssen 9, 10 angeordnet. Exemplarisch ist die Steckdosen-Aussparung 23 in dem Unterteil 69 vorgesehen und nach oben hin offen ausgestaltet, so dass die Steckdosen-Aussparung 23 durch den Deckel 15 nach oben hin verschlossen werden kann. Die Steckdosen-Aussparung 23 und der Steckdosen-Einsatz 24 sind vorzugsweise derart ausgestaltet, dass der Steckdosen-Einsatz 24 fest in die Steckdosen-Aussparung 23 eingesetzt, insbesondere eingesteckt, werden kann, so dass der Steckdosen-Einsatz 24 zumindest bei geschlossenem Deckel 15 in der Steckdosen-Aussparung 23 verbleibt.

Die Figur 5 zeigt den Zyklonvorabscheider 1 zusammen mit einem Partikelauffangbehälter 2, auf den der Zyklonvorabscheider 1 aufgesetzt werden kann. Der Partikelauffangbehälter 2 dient dazu, die aus dem Partikelauslass 8 ausgegebenen Partikel aufzufangen und zu sammeln.

Die Figur 6 zeigt den Zyklonvorabscheider 1 in einem Zustand, in dem er auf dem Partikelauffangbehälter 2 aufgesetzt ist und mithilfe der unteren Gehäuse-Kopplungsmittel 11 vertikal zugfest mit dem Partikelauffangbehälter 2 verbunden ist. Der Zyklonvorabscheider 1 sitzt mit seiner Unterseite 7 bzw. der an der Unterseite 7 angeordneten Rinne 25 auf dem Partikelauffangbehälter 2 auf.

Die Erstreckung des Partikelauffangbehälters 2 in Vertikalrichtung ist größer als die Erstreckung des Zyklonvorabscheiders 1 in Vertikalrichtung. Vorzugsweise ist der Partikelauffangbehälter 2 doppelt so hoch oder mehr als doppelt so hoch wie der Zyklonvorabscheider 1. Der Partikelauffangbehälter 2 verfügt über eine offene Oberseite 32. Die Erstreckung der offenen Oberseite 32 ist jeweils in Längsrichtung und in Querrichtung kleiner als die entsprechende Erstreckung der Unterseite 7 des Zyklonvorabscheiders 1.

Der Partikelauffangbehälter 2 verfügt über einen exemplarisch rechteckig ausgestalteten Behälterboden 31 sowie sich von dem Behälterboden 31 nach oben erstreckende Behälter-Umfangswände 33, 34, 35, 36. Die Oberseite 32 des Partikelauffangbehälter 2 ist komplett offen; d.h. die Oberseite 32 wird von dem oberen Rand 27 der Behälter-Umfangswände 33, 34, 35, 36 gebildet. Die Höhe des Partikelauffangbehälters 2 ist exemplarisch größer als seine Länge und größer als seine Breite. Zweckmäßigerweise ist die Breite des Partikelauffangbehälters 2 geringer als seine Länge.

Der Partikelauffangbehälter 2 weist einen sich zu dem Behälterboden 31 hin verjüngenden horizontalen Querschnitt auf. Insbesondere handelt es sich um einen sich stetig verjüngenden horizontalen Querschnitt. Die Form des Partikelauffangbehälters 2 entspricht zweckmäßigerweise einem umgedrehten Pyramidenstumpf mit rechteckiger Grundfläche. Die Ausgestaltung mit dem nach unten hin verjüngenden horizontalen Querschnitt soll hier auch als "konisch" bezeichnet werden. Aufgrund dieser konischen Ausgestaltung des Partikelauffangbehälters 2 sind mehrere Partikelauffangbehälter 2 ineinander stapelbar und dadurch besonders gut verstaubar und transportierbar. Ferner ist ein derart ausgestalteter Partikelauffangbehälter 2 per Spritzguss herstellbar.

Der Partikelauffangbehälter 2 und insbesondere der Behälterboden 31 ist derart ausgestaltet, dass der Partikelauffangbehälter 2 mit dem Behälterboden 31 stabil auf eine ebene Unterlage gestellt werden kann, insbesondere auch dann, wenn der Zyklonvorabscheider 1 auf dem Partikelauffangbehälter 2 aufgesetzt ist.

Der Partikelauffangbehälter 32 verfügt über Behälter-Griffe 38, die an den parallel zur Querrichtung ausgerichteten Behälter-Umfangswänden 35, 36 angeordnet sind. Die Behälter-Griffe 38 sind im Bereich der Oberseite 32 angeordnet. Exemplarisch schließen die Behälter-Griffe 38 bündig mit der Oberseite 32 ab. Die Behälter-Griffe 38 gewährleisten, dass der Partikelauffangbehälter 32 gut gegriffen und getragen werden kann. Darüber hinaus sind die Behälter-Griffe 38 als Abstandshalter ausgebildet, die bei zwei oder mehreren ineinander gestapelten Partikelauffangbehältern 2 eine vergrößerte vertikale Beabstandung zwischen den jeweiligen Oberseiten 32 bewirken, so dass die ineinander gestapelten Partikelauffangbehälter 2 ohne größeren Kraftaufwand voneinander abgenommen bzw. getrennt werden können.

Exemplarisch verfügen die Behälter-Griffe 38 jeweils über zwei Vertikalstege 76, zwischen denen zwei zueinander beabstandete Horizontalstege 77 angeordnet sind. Der obere Horizontalsteg 77 schließt bündig mit der Oberseite 32 des Partikelauffangbehälters 2 ab.

Der Partikelauffangbehälter 2 verfügt ferner über Behälter-Kopplungsmittel 37. Die Behälter-Kopplungsmittel 37 sind ausgebildet, im Zusammenspiel mit den unteren Gehäuse-Kopplungsmitteln 11 eine lösbare, vertikal zugfeste Kopplung zwischen dem Partikelauffangbehälter 2 und dem Zyklonvorabscheider 1 bereitzustellen. Exemplarisch sind die Behälter-Kopplungsmittel 37 an den parallel zur Längsrichtung ausgerichteten Umfangsseiten 33, 34 des Partikelauffangbehälters 2 angeordnet. Bei den Behälter-Kopplungsmitteln 37 handelt es sich zweckmäßigerweise um stegförmige Vorsprünge. Die Behälter-Kopplungsmittel 37 sind vorzugsweise mit ihrer Längsachse parallel zur Längsrichtung ausgerichtet und in Längsrichtung insbesondere mittig an den Umfangsseiten 33, 34 angeordnet. Ferner befinden sich die Behälter-Kopplungsmittel 37 zweckmäßigerweise im Bereich der Oberseite 32 des Partikelauffangbehälters 2.

Die Figur 7 zeigt eine Anordnung 40 aus dem Zyklonvorabscheider 1, dem Partikelauffangbehälter 2 und einer Saugvorrichtung 41. Der Zyklonvorabscheider 1 ist auf dem Partikelauffangbehälter 2 aufgesetzt und mithilfe der Gehäuse-Kopplungsmittel 11 und der Behälter-Kopplungsmittel 37 vertikal zugfest an den Partikelauffangbehälter 2 gekoppelt. Der Partikelauffangbehälter 2 ist wiederum in eine Behälter-Aufnahme 43 eingesetzt, die an der Oberseite 42 der Saugvorrichtung 41 vorgesehen ist. Die Saugvorrichtung 41 verfügt über einen Sauganschluss 46 und ist ausgebildet, an diesem Sauganschluss 46 einen Unterdruck bereitzustellen. Der Sauganschluss 46 ist über einen Schlauch 45 mit dem Luftauslass-Schlauchanschluss 10 verbunden. An dem Lufteinlass-Schlauchanschluss 9 ist ein Saugschlauch 78 mit einem Saugkopf 79 angeschlossen. Bei der Saugvorrichtung 41 handelt es sich zweckmäßigerweise um eine Beutel-Saugvorrichtung und/oder eine Filter-Saugvorrichtung.

Wird die Saugvorrichtung 41 eingeschaltet und beginnt zu saugen, so wird durch den Saugkopf 79 und den Saugschlauch 78 ein Luftstrom in den Zyklonvorabscheider 1 eingesaugt. Dort wird ein Anteil der in dem Luftstom befindlichen Partikeln abgeschieden und in den Partikelauffangbehälter 2 befördert. Der Luftstrom wird über den Luftauslass 6 ausgegeben und gelangt durch den Schlauch 45 und den Sauganschluss 46 in die Saugvorrichtung 41. Dort durchläuft der Luftstrom beispielsweise einen Beutel und/oder einen Filter, wo die zu diesem Zeitpunkt noch im Luftstrom enthaltenen Partikel abgeschieden werden. Dadurch, dass bereits ein Anteil der Partikel in dem Zyklonvorabscheider 1 abgeschieden wurde, gelangen weniger Partikel in den Beutel bzw. Filter, so dass der Beutel bzw. Filter weniger häufig gewechselt werden muss.

Die Saugvorrichtung 41 umfasst ein Sauggerät 79 und einen auf dem Sauggerät 79 aufgesetzten Adapterrahmen 51. Die Behälter-Aufnahme 43 ist in dem Adapterrahmen 51 vorgesehen.

Alternativ zu der gezeigten Ausgestaltung, bei der die Behälter-Aufnahme 43 in dem Adapterrahmen 51 vorgesehen ist, kann die Behälter-Aufnahme 43 auch in dem Sauggerät 79 integriert sein. In diesem Fall ist der Adapterrahmen 51 nicht erforderlich.

Das Sauggerät 79 ist exemplarisch als Mobilsauger ausgebildet und verfügt über Fahrrollen 81, mit denen das Sauggerät 79 verfahrbar ist. Das Sauggerät 79 verfügt über Sauggerät-Kopplungsmittel 82, die mit unteren Adapterrahmen-Kopplungsmitteln 53 gekoppelt sind. Exemplarisch handelt es sich bei den Sauggerät-Kopplungsmitteln 82 um beweglich gelagerte Verriegelungslaschen und bei den unteren Adapterrahmen-Kopplungsmitteln 53 um Verriegelungsvorsprünge.

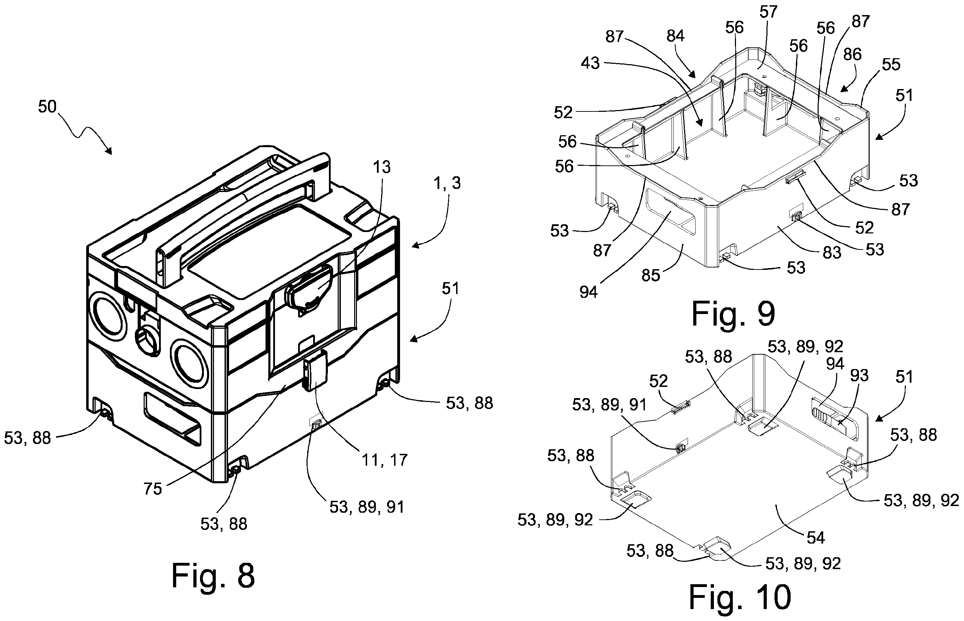

Wie noch im Detail erläutert und in den Figuren 9 und 10 gezeigt, umfassen die unteren Adapterrahmen-Kopplungsmittel 53 exemplarisch erste untere Adapterrahmen-Kopplungsmittel 88 und zweite untere Adapterrahmen-Kopplungsmittel 89. In dem Ausführungsbeispiel der Figur 7 ist der Adapterrahmen 51 mit den ersten unteren Adapterrahmen-Kopplungsmitteln 88 an dem Sauggerät 79 gekoppelt. Alternativ dazu kann die Kopplung auch über die zweiten unteren Adapterrahmen-Kopplungsmitteln 89 erfolgen. In letzterem Fall kann das Sauggerät 79 derart ausgestaltet sein, dass es entsprechende Kopplungsmittel umfasst, die mit den zweiten unteren Adapterrahmen-Kopplungsmitteln 89 kompatibel sind. Beispielsweise kann das Sauggerät 79 Kopplungsmittel umfassen, die entsprechend den oberen Gehäuse-Kopplungsmitteln 12 ausgebildet sind und z.B. ein beweglich gelagertes Verriegelungselement, insbesondere einen Drehriegel, sowie Eingriffsvertiefungen umfassen.

Die Behälter-Aufnahme 43 ist in Entsprechung zu dem Partikelauffangbehälter 2 konisch ausgestaltet; d.h., der horizontale Querschnitt der Behälter-Aufnahme 43 verjüngt sich hin zu dem Aufnahmeboden 44. Die Behälter-Aufnahme 43 umgibt den Partikelauffangbehälter 2 umfänglich, so dass der Partikelauffangbehälter 2 stabil in der Behälter-Aufnahme 43 gehalten wird. Die Behälter-Aufnahme 43 ist (in Vertikalrichtung) insbesondere weniger als halb so tief, vorzugsweise weniger als ein Drittel so tief, wie der Partikelauffangbehälter 2 hoch ist.

Die in der Figur 7 gezeigte Anordnung 40 umfasst ferner ein Elektrogerät 47, beispielsweise ein Elektrowerkzeug, das an der Steckdose 22 des Zyklonvorabscheiders 1 angeschlossen ist. Die Steckdose 22 ist wiederum über das Anschlusskabel 48 an dem Sauggerät 79 angeschlossen. Das Sauggerät 79 ist ausgebildet, ein Einschalten des Elektrowerkzeugs 47 zu erfassen und in Ansprechen darauf beginnen zu saugen.

Die Figur 8 zeigt eine Anordnung 50 aus dem Zyklonvorabscheider 1 und dem Adapterrahmen 51. In den Figuren 9 und 10 ist der Adapterrahmen 51 für sich genommen gezeigt. Wie vorstehend bereits erwähnt, verfügt der Adapterrahmen 51 über die Behälter-Aufnahme 43. Der Adapterrahmen 51 verfügt ferner über obere Adapterrahmen-Kopplungsmittel 52, die eine lösbare, vertikal zugfeste Kopplung mit dem Zyklonvorabscheider 1, insbesondere mit den unteren Gehäuse-Kopplungsmitteln 11 des Zyklonvorabscheiders, 1 bereitstellen.

In dem Zustand, in dem der Zyklonvorabscheider 1 auf dem Adapterrahmen 51 aufgesetzt und mit diesem gekoppelt ist, können der Zyklonvorabscheider 1 und der Adapterrahmen 51 zusammen besonders gut transportiert und verstaut werden. Insbesondere weist die Anordnung 50 mit den oberen Gehäuse-Kopplungsmitteln 13 und den unteren Adapterrahmen-Kopplungsmitteln 53 die oberen und unteren Kopplungsmittel einer Systemkiste auf und lässt sich daher wie eine Systemkiste handhaben und insbesondere in einem Stapel aus Systemkisten transportieren und verstauen. Insgesamt verfügt die Anordnung 50 über eine kistenförmige, insbesondere quaderförmige, Gestalt.

Die oberen Gehäuse-Kopplungsmittel 13 und die unteren Adapterrahmen-Kopplungsmittel 53 sind insbesondere derart ausgebildet, dass sie zusammen die Kopplungsmittel einer Systemkiste darstellen, und somit insbesondere mit sich selbst koppelbar sind. Dies bedeutet, dass die oberen Gehäuse-Kopplungsmittel 13 und die unteren Adapterrahmen-Kopplungsmittel 53 insbesondere derart ausgebildet sind, dass ein mit den unteren Adapterrahmen-Kopplungsmitteln 53 ausgestatteter Körper auf einen mit den oberen Gehäuse-Kopplungsmitteln 13 ausgestatteten Körper stapelbar und an diesen lösbar, vertikal zugfest koppelbar ist.

Alternativ oder zusätzlich zu der beschriebenen Ausgestaltung, bei der der Zyklonvorabscheider 1 zusammen mit dem Adapterrahmen 3 eine Systemkiste bildet, kann der Zyklonvorabscheider 1 auch derart ausgestaltet sein, dass er für sich genommen als Systemkiste fungiert. Insbesondere kann der Zyklonvorabscheider 1 mit derartigen unteren Gehäuse-Kopplungsmitteln ausgestattet sein, dass er auf einen identischen Zyklonvorabscheider stapelbar und mit diesem lösbar, vertikal zugfest koppelbar ist.

Die Figur 9 zeigt den Adapterrahmen 51 von oben. In der Figur 10 ist der Adapterrahmen 51 von unten gezeigt. Der Adapterrahmen 51 verfügt über einen rechteckigen Adapterrahmen-Boden 54, von dem sich vier Adapterrahmen-Umfangswände 83, 84, 85, 86 nach oben erstrecken. Die Umfangswände 83, 84 stellen parallel zur Längsrichtung ausgerichtete Längsseiten dar und die Umfangswände 85, 86 stellen parallel zur Querrichtung ausgerichtete Querseiten dar. An der Innenseite der Adapterrahmen-Umfangswände 83, 84, 85, 86 ist exemplarisch eine Mehrzahl von vertikalen Stegen 56 angeordnet, die die konische Behälteraufnahme 43 definieren. Die Stege 56 sind jeweils trapezförmig ausgestaltet und an einer Innenseite der Umfangswände 83, 84, 85, 86 und an einer Innenseite des Adapterrahmen-Bodens 54 befestigt. Die nach innen gewandten Innenkanten der Stege 56 sind gegenüber den Umfangswänden 55 bzw. dem Adapterrahmen-Boden 54 angewinkelt, so dass der horizontale Abstand zwischen den Innenkanten und den Umfangswänden zum Adapterrahmen-Boden 54 hin stetig zunimmt.

Im oberen Bereich des Adapterrahmens 51 ist exemplarisch ein Rahmenelement 57 angeordnet, das den oberen Abschluss der Behälteraufnahme 43 definiert. Das Rahmenelement 57 ist an den Umfangswänden 83, 84, 85, 86 befestigt und mit seiner größten Fläche horizontal ausgerichtet. Das Rahmenelement 57 verfügt über eine Rahmenöffnung, die den Zugang zur Behälter-Aufnahme 43 darstellt. Das Rahmenelement 57 verfügt über eine umlaufende Innenkante, die den oberen Abschluss der Behälter-Aufnahme 43 bildet. Auf der Höhe, auf der die Stege 56 das Rahmenelement 57 berühren, sind die Stege 56 und das Rahmenelement 57 in horizontaler Richtung bündig zueinander ausgestaltet.

Alternativ oder zusätzlich zu der gezeigten Ausgestaltung, bei der die Behälter-Aufnahme 43 durch Stege 56 und das Rahmenelement 57 definiert wird, kann die Behälter-Aufnahme 43 auch durch eine oder mehrere geschlossene Innenwände definiert werden. Beispielsweise können sämtliche Innenwände der Behälter-Aufnahme 43 geschlossen sein.

Wie in der Figur 9 gezeigt, stehen die Umfangswände 83, 84, 85, 86 nach oben über das Rahmenelement 57 bzw. über den oberen Abschluss der Behälter-Aufnahme 43 über. Die oberen Kanten der Umfangswände 83, 84, 85, 86 bilden einen oberen Rand 55.

An jeder Umfangswand 83, 84, 85, 86 ist rein exemplarisch eine Umfangswand-Vertiefung 87 vorgesehen, bei welcher die Höhe der oberen Kante der jeweiligen Umfangswand 83, 84, 85, 86 relativ zu dem sonstigen oberen Rand 55 verringert ist. Die Umfangswand-Vertiefungen 87 der parallel zur Längsrichtung ausgerichteten Umfangswände sind in Entsprechung zu den vorstehend diskutierten überstehenden Wandabschnitten 75 des Zyklonvorabscheiders 1 ausgebildet, so dass, wie in der Figur 8 zu sehen, die überstehenden Wandabschnitte 75 in diese Umfangswand-Vertiefungen 87 passen.

Alternativ zu dieser rein exemplarischen Ausgestaltung kann der Adapterrahmen 51 auch ohne die Umfangswand-Vertiefungen 87 ausgestaltet sein. Insbesondere kann der Adapterrahmen 51 auch einen oberen Rand 55 aufweisen, der in Entsprechung zu dem oberen Rand 27 des Partikelauffangbehälters 2 ausgebildet ist, so dass er ebenfalls in die Rinne 25 des Zyklonvorabscheiders 1 eingesetzt werden kann. Zweckmäßigerweise ist der obere Rand 55 des Adapterrahmens 51 eben ausgestaltet.

An den parallel zur Längsrichtung ausgerichteten Umfangswänden 83, 84 sind die oberen Adapterrahmen-Kopplungsmittel 52 angeordnet. Zweckmäßigerweise handelt es sich bei den Adapterrahmen-Kopplungsmitteln 52 um stegförmige Vorsprünge. Insbesondere sind die Adapterrahmen-Kopplungsmittel 52 mit ihrer Längsachse parallel zur Längsrichtung ausgerichtet und vorzugsweise in Längsrichtung mittig an den Umfangsseiten 83, 84 angeordnet. Zweckmäßigerweise befinden sich die Adapterrahmen-Kopplungsmittel 52 im Bereich des oberen Rands 55 des Adapterrahmens 51.

In dem Ausführungsbeispiel der Figur 8 entspricht der Verlauf des oberen Rands 55 des Adapterrahmens 51 dem Verlauf des äußeren Rands 26 der Unterseite 7 des Zyklonvorabscheiders 1. Bei dem gezeigten, auf den Adapterrahmen 51 aufgesetzten Zyklonvorabscheider 1 ist folglich der äußere Rand 26 der Unterseite 7 des Zyklonvorabscheiders 1 genau über dem oberen Rand 55 des Adapterrahmens 51 angeordnet bzw. sitzt auf diesem auf.

Alternativ zu dieser rein exemplarischen Ausgestaltung kann der obere Rand 55 des Adapterrahmens 51 gegenüber dem unteren Rand der Umfangswände 83, 84, 85, 86 bzw. der unteren Außenkontur des Adapterrahmens 51 nach innen versetzt sein, so dass der obere Rand 55 des Adapterrahmens 51 in die Rinne 25 des Zyklonvorabscheiders 1 eingesetzt werden kann.

Wie vorstehend bereits erwähnt, verfügt der Adapterrahmen 51 über untere Adapterrahmen-Kopplungsmittel 53. Die unteren Adapterrahmen-Kopplungsmittel 53 umfassen exemplarisch erste untere Adapterrahmen-Kopplungsmittel 88 und zweite untere Adapterrahmen-Kopplungsmittel 89. Die ersten unteren Adapterrahmen-Kopplungsmittel 88 und die zweiten unteren Adapterrahmen-Kopplungsmittel 89 sind jeweils zu unterschiedlichen Kopplungssystemen bzw. Systemkisten kompatibel. Gemäß einer nicht in den Figuren gezeigten, alternativen Ausgestaltung sind entweder die ersten unteren Adapterrahmen-Kopplungsmittel 88 oder die zweiten unteren Adapterrahmen-Kopplungsmittel 89 nicht vorhanden.

Die ersten unteren Adapterrahmen-Kopplungsmittel 88 umfassen mehrere Verriegelungsvorsprünge, die in den hinteren Eckbereichen an den beiden parallel zur Querrichtung ausgerichteten Umfangsseiten 85, 86 angeordnet sind und in den beiden Eckbereichen der parallel zur Längsrichtung ausgerichteten vorderen Umfangsseite 83 angeordnet sind.

Die zweiten unteren Adapterrahmen-Kopplungsmittel 89 umfassen einen Verriegelungsvorsprung 91, der in Längsrichtung mittig an der vorderen Umfangsseite 83 angeordnet ist. Ferner umfassen die zweiten Adapterrahmen-Kopplungsmittel 89 exemplarisch als Standfüße ausgebildete Eingriffsvorsprünge 92, die in den Eckbereichen der Unterseite des Adapterrahmens 51 angeordnet sind. Die Eingriffsvorsprünge 92 und die vorstehend beschriebenen Eingriffsvertiefungen 64 des Zyklonvorabscheiders 1 sind derart ausgestaltet, dass bei einem auf dem Zyklonvorabscheider 1 gestapelten Adapterrahmen 51 die Eingriffsvorsprünge 92 mit den Eingriffsvertiefungen 64 in einem verriegelnden Eingriff stehen. Weitere Details zu möglichen Ausgestaltungen solcher Eingriffsvorsprünge und Eingriffsvertiefungen sind beispielsweise in der EP2315701B1 beschrieben.

Der Adapterrahmen 51 verfügt rein exemplarisch über betätigbare Klemmmittel 93, die ausgebildet sind, einen in die Behälteraufnahme 43 eingesetzten Partikelauffangbehälter 2 in der Behälteraufnahme 43 festzuklemmen. Die Klemmmittel 93 können beispielsweise einen oder mehrere Klemmhebel umfassen. Der Klemmhebel kann beispielsweise um eine vertikale Achse gelagert sein. Exemplarisch sind die Klemmmittel 93 an den parallel zur Querrichtung ausgerichteten Umfangsseiten 85, 86 angeordnet. Wie in den Figuren 9 und 10 gezeigt, ist an den Umfangsseiten 85, 86 exemplarisch jeweils ein Fenster 94 vorgesehen, in dem ein Klemmmittel 83 angeordnet ist.

Die Figur 11 zeigt eine Anordnung 60, die den Zyklonvorabscheider 1 sowie einen kistenförmigen Körper 14 umfasst. Der kistenförmige Körper 14 ist auf dem Zyklonvorabscheider 1 angeordnet und bildet zusammen mit dem Zyklonvorabscheider 1 einen vertikalen, im Wesentlichen quaderförmigen Stapel. Der kistenförmige Körper 14 verfügt über untere Körper-Kopplungsmittel 95, die mit den oberen Gehäuse-Kopplungsmitteln 12 zusammenwirken können, um eine lösbare, vertikal zugfeste Kopplung zwischen dem kistenförmigen Körper 14 und dem Zyklonabscheider 1 bereitzustellen. Zweckmäßigerweise sind die unteren Körper-Kopplungsmittel 95 identisch zu den vorstehend beschriebenen zweiten unteren Adapterrahmen-Kopplungsmitteln 89 ausgebildet. Insbesondere umfassen die unteren Körper-Kopplungsmittel 95 einen Verriegelungsvorsprung sowie Eingriffsvorsprünge.

Bei dem kistenförmigen Körper 14 handelt es sich insbesondere um eine Systemkiste. Zweckmäßigerweise weist der kistenförmige Körper 14 eine Saugeinrichtung 62 und einen Sauganschluss 63 auf. Bei der Saugeinrichtung 62 handelt es sich zweckmäßigerweise um eine Beutel- und/oder Filter-Saugeinrichtung. Der Sauganschluss 63 kann über einen nicht gezeigten Schlauch mit dem Luftauslass-Schlauchanschluss 10 des Zyklonvorabscheiders 1 verbunden sein, so dass mittels der Saugeinrichtung 62 der für den Betrieb des Zyklonvorabscheiders 1 benötigte Unterdruck bereit gestellt werden kann. Im gezeigten Beispiel ist auf dem kistenförmigen Körper 14 ferner ein kistenförmiges Schlauchdepot 96 aufgesetzt.

## Patentansprüche

1. Zyklonvorabscheider (1) zum Aufsetzen auf einen Partikelauffangbehälter (2), umfassend ein kistenförmiges Gehäuse (3) und eine im Gehäuse (3) angeordnete Zykloneinheit (4), die über einen Lufteinlass (5), einen Luftauslass (6) und einen an einer Unterseite (7) des Zyklonvorabscheiders (1) angeordneten Partikelauslass (8) verfügt, wobei das Gehäuse (3) über einen mit dem Lufteinlass (5) in Verbindung stehenden Lufteinlass-Schlauchanschluss (9) und einen mit dem Luftauslass (6) in Verbindung stehenden Luftauslass-Schlauchanschluss (10) verfügt, sowie über untere Gehäuse-Kopplungsmittel (11), die dazu ausgebildet sind, in einem Zustand, in dem der Zyklonvorabscheider (1) auf dem Partikelauffangbehälter (2) aufgesetzt ist, eine lösbare, vertikal zugfeste Kopplung mit dem Partikelauffangbehälter (2) bereitzustellen.

2. Zyklonvorabscheider (1) nach Anspruch 1, **dadurch gekennzeichnet, dass** das Gehäuse (3) über obere Gehäuse-Kopplungsmittel (12) verfügt, die insbesondere ein beweglich gelagertes Verriegelungselement (13) umfassen und die dazu ausgebildet sind, in einem Zustand, in dem ein kistenförmiger Körper (14) auf das Gehäuse (3) gestapelt ist, eine lösbare, vertikal zugfeste Kopplung mit dem kistenförmigen Körper (14) bereitzustellen.

3. Zyklonvorabscheider (1) nach Anspruch 2, **dadurch gekennzeichnet, dass** das Gehäuse (3) über einen abnehmbaren und/oder verschwenkbaren Deckel (15) verfügt, der in einer Offenstellung einen Zugang zu der Zykloneinheit (4) freigibt.

4. Zyklonvorabscheider (1) nach Anspruch 3, **dadurch gekennzeichnet, dass** die oberen Gehäuse-Kopplungsmittel (12) einen Drehriegel (16) umfassen, der an dem Deckel (15) angeordnet ist und der sowohl zur Verriegelung des Deckels (15) als auch zur Bereitstellung der Kopplung mit dem kistenförmigen Körper (14) ausgebildet ist.

5. Zyklonvorabscheider (1) nach einem der Ansprüche 2 bis 4, **dadurch gekennzeichnet, dass** die unteren Gehäuse-Kopplungsmittel (11) wenigstens ein beweglich gelagertes Verriegelungselement (17) umfassen und vorzugsweise an Längsseiten des Gehäuses (3) vorgesehen sind.

6. Zyklonvorabscheider (1) nach einem der Ansprüche 2 bis 5, **dadurch gekennzeichnet, dass** der Lufteinlass-Schlauchanschluss (9) und der Luftauslass-Schlauchanschluss (10) an einer der Umfangsseiten (20), insbesondere an einer Stirnseite, des Gehäuses (3) angeordnet sind.

7. Zyklonvorabscheider (1) nach einem der Ansprüche 2 bis 6, **dadurch gekennzeichnet, dass** der Zyklonvorabscheider (1) eine Steckdose (22) aufweist und/oder das Gehäuse (3) eine Steckdosen-Aussparung (23) zur Aufnahme eines Steckdosen-Einsatzes (24) aufweist.

8. Zyklonvorabscheider (1) nach einem der Ansprüche 2 bis 7, **dadurch gekennzeichnet, dass** an der Unterseite (7) des Zyklonvorabscheiders (1) eine Rinne (25) vorgesehen ist, die entlang des äußeren Rands (26) der Unterseite (7) verläuft und zur Aufnahme des oberen Rands (27) des Partikelauffangbehälters (7) ausgebildet ist.

9. Zyklonvorabscheider (1) nach einem der Ansprüche 2 bis 8, **gekennzeichnet durch** einen bügelförmigen Tragegriff (28), der an der Oberseite (29) des Gehäuses (3) angeordnet ist.

10. Anordnung (30, 40) aus einem Partikelauffangbehälter (2) und einem auf dem Partikelauffangbehälter (2) aufgesetzten Zyklonvorabscheider (1) nach einem der Ansprüche 2 bis 9, wobei der Partikelauffangbehälter (2) einen sich zu seinem Behälterboden (31) hin verjüngenden horizontalen Querschnitt aufweist, so dass der Partikelauffangbehälter (2) in einen identischen Partikelauffangbehälter stapelbar ist, und der Behälterboden (31) derart ausgestaltet ist, dass die Anordnung (30) mit dem Behälterboden (31) stabil auf eine ebene Unterlage abstellbar ist.

11. Anordnung (40) nach Anspruch 10, **dadurch gekennzeichnet, dass** die Anordnung (40) eine Saugvorrichtung (41) aufweist, die an ihrer Oberseite (42) über eine Behälter-Aufnahme (43) mit einem sich zum Aufnahmeboden (44) hin verjüngenden horizontalen Querschnitt verfügt, wobei der Partikelauffangbehälter (2) in die Behälter-Aufnahme (43) eingesetzt ist und der Luftauslass-Schlauchanschluss (10) über einen Schlauch (45) mit einem Sauganschluss (46) der Saugvorrichtung (41) verbunden ist.

12. Anordnung (40) nach Anspruch 10 oder 11, **dadurch gekennzeichnet, dass** die Anordnung (40) ferner ein Sauggerät (79) und ein Elektrowerkzeug (47) umfasst und der Zyklonvorabscheider (1) über eine Steckdose (22) verfügt, wobei das Elektrowerkzeug (47) an der Steckdose (22) angeschlossen ist und die Steckdose (22) über ein Anschlusskabel (48) an dem Sauggerät (79) angeschlossen ist, und das Sauggerät (79) ausgebildet ist, ein Einschalten des Elektrowerkzeugs (47) zu erfassen und in Ansprechen darauf beginnen zu saugen.

13. Anordnung (50) aus einem Adapterrahmen (51) und einem auf dem Adapterrahmen (51) aufgesetzten Zyklonvorabscheider (1) nach einem der Ansprüche 2 bis 9, **dadurch gekennzeichnet, dass** der Adapterrahmen (51) über eine Behälter-Aufnahme (43) mit einem sich zum Aufnahmeboden (44) hin verjüngenden horizontalen Querschnitt verfügt sowie über obere Adapterrahmen-Kopplungsmittel (52), die eine lösbare, vertikal zugfeste Kopplung mit dem Zyklonvorabscheider (1) bereitstellen, und über untere Adapterrahmen-Kopplungsmittel (53), die dazu ausgebildet sind, in einem Zustand, in dem der Adapterrahmen (51) auf einem Körper, insbesondere einem Sauggerät (41), angeordnet ist, eine lösbare, vertikal zugfeste Kopplung mit dem Körper bereitzustellen.

14. Anordnung (60) umfassend einen Zyklonvorabscheider (1) nach einem der Ansprüche 2 bis 9, sowie mindestens einen kistenförmigen Körper (14), der auf dem Zyklonvorabscheider (1) angeordnet ist, um zusammen mit dem Zyklonvorabscheider (1) einen vertikalen, im Wesentlichen quaderförmigen Stapel zu bilden, wobei der kistenförmige Körper (14) über Körper-Kopplungsmittel (61) verfügt, die mit den oberen Gehäuse-Kopplungsmitteln (12) zusammenwirken, um eine lösbare, vertikal zugfeste Kopplung zwischen dem kistenförmigen Körper (14) und dem Zyklonvorabscheider (1) bereitzustellen

15. Anordnung (60) nach Anspruch 14, **dadurch gekennzeichnet, dass** der kistenförmige Körper (14) eine Saugeinrichtung (62) und einen Sauganschluss (63) aufweist.

## Claims

1. Cyclone pre-separator (1) for positioning on a particle collecting container (2), comprising a box-shaped housing (3) and a cyclone unit (4) arranged in the housing (3), the cyclone unit comprising an air inlet (5), an air outlet (6), and a particle outlet (8) arranged on a underside (7) of the cyclone pre-separator (1), wherein the housing (3) has an air inlet hose port (9) connected to the air inlet (5) and an air outlet hose port (10) connected to the air outlet (6), and has lower housing couplers (11), adapted to provide a releasable, vertically tension-proof coupling to the particle collecting container (2) in a state in which the cyclone pre-separator (1) is positioned on the particle collecting container (2).

2. Cyclone pre-separator (1) according to claim 1, **characterised in that** the housing (3) has upper housing couplers (12), which in particular comprise a movably mounted locking element (13) and are adapted to provide, in a state, in which a box-shaped body (14) is stacked on the housing (3), a releasable, vertically tension-proof coupling to the box-shaped body (14)

3. Cyclone pre-separator (1) according to claim 2, **characterised in that** the housing (3) has a removable and/or pivotable cover (15), which in an open position provides an access to the cyclone unit (4).

4. Cyclone pre-separator (1) according to claim 3, **characterised in that** the upper housing couplers (12) comprise a rotary latch (16), arranged on the cover (15) and adapted both for locking the cover (15) and for providing the coupling to the box-shaped body (14).

5. Cyclone pre-separator (1) according to any one of claims 2 to 4, **characterised in that** the lower housing couplers (11) comprise at least one movably mounted locking element (17) and preferably are provided on longitudinal sides of the housing (3).

6. Cyclone pre-separator (1) according to any one of claims 2 to 5, **characterised in that** the air inlet hose port (9) and the air outlet hose port (10) are arranged on one of the peripheral sides (20), in particular on a face side, of the housing (3).

7. Cyclone pre-separator (1) according to any one of claims 2 to 6, **characterised in that** cyclone pre-separator (1) comprises a socket (22) and/or the housing (3) comprises a socket recess (23) to accept a socket insert (24).

8. Cyclone pre-separator (1) according to any one of claims 2 to 7, **characterised in that** on the underside (7) of the cyclone pre-separator (1) a groove (25) is provided, which runs along the outer edge (26) of the underside (7) and is adapted to receive the upper edge (27) of the particle collecting container (7).

9. Cyclone pre-separator (1) according to any one of claims 2 to 8, **characterised by** a bow-shaped carrying handle (28), arranged on the upper side (29) of the housing (3).

10. Arrangement (30, 40) of a particle collecting container (2) and a cyclone pre-separator (1) positioned on the particle collecting container (2) according to any one of claims 2 to 9, wherein the particle collecting container (2) has a horizontal cross-section tapering towards its container bottom (31), so that the particle collecting container (2) can be inter-stacked with an identical particle collecting container, and the container bottom (31) is adapted such that the arrangement (30) can be placed with the container bottom (31) stably on a flat support.

11. Arrangement (40) according to claim 10, **characterised in that** the arrangement (40) comprises a suction device (41), which on its upper side (42) has a container receptacle (43) with a horizontal cross-section tapering towards the receptacle bottom (44), wherein the particle collecting container (2) is inserted in the container receptacle (43) and the air outlet hose port (10) is connected via a hose (45) to a suction port (46) of the suction device (41).

12. Arrangement (40) according to claim 10 or 11, **characterised in that** the arrangement (40) further comprises a suction device (79) and a power tool (47) and the cyclone pre-separator (1) has a socket (22), wherein the power tool (47) is connected to the socket (22) and the socket (22) is connected via a connecting cable (48) to the suction device (79), and the suction device (79) is adapted to detect that the power tool (47) has been switched on and, in response thereto, to start sucking.

13. Arrangement (50) of an adapter frame (51) and a cyclone pre-separator (1) according to any one of claims 2 to 9, the cyclone pre-separator (1) being positioned on the adapter frame (51), **characterised in that** the adapter frame (51) has a container receptacle (43) with a horizontal cross-section tapering towards the receptacle bottom (44) and upper adapter frame couplers (52), providing a releasable, vertically tension-proof coupling with the cyclone pre-separator (1), and lower adapter frame couplers (53), adapted to provide, in a state, in which the adapter frame (51) is arranged on a body, in particular a suction device (41), a releasable, vertically tension-proof coupling with the body.

14. Arrangement (60) comprising a cyclone pre-separator (1) according to any one of claims 2 to 9, and at least one box-shaped body (14), arranged on the cyclone pre-separator (1), in order to form, together with the cyclone pre-separator (1), a vertical, substantially cuboid stack, wherein the box-shaped body (14) has body couplers (61), which interact with the upper housing couplers (12), to provide a releasable, vertically tension-proof coupling between the box-shaped body (14) and the cyclone pre-separator (1).

15. Arrangement (60) according to claim 14, **characterised in that** the box-shaped body (14) has a suction unit (62) and a hose port (63).

## Revendications

1. Pré-séparateur à cyclone (1) pour le placement sur un récipient collecteur de particules (2), comprenant un boîtier en forme de caisse (3) et une unité de cyclone (4) agencée dans le boîtier (3) qui dispose d'une entrée d'air (5), d'une sortie d'air (6) et d'une sortie de particules (8) agencée au niveau d'un côté inférieur (7) du pré-séparateur à cyclone (1), dans lequel le boîtier (3) dispose d'un raccord de tuyau d'entrée d'air (9) se trouvant en liaison avec l'entrée d'air (5) et d'un raccord de tuyau de sortie d'air (10) se trouvant en liaison avec la sortie d'air (6), ainsi que de moyens de couplage de boîtier (11) inférieurs qui sont réalisés afin de fournir dans un état, dans lequel le pré-séparateur à cyclone (1) est placé sur le récipient collecteur de particules (2), un couplage résistant à la traction verticalement, détachable avec le récipient collecteur de particules (2).

2. Pré-séparateur à cyclone (1) selon la revendication 1, **caractérisé en ce que** le boîtier (3) dispose de moyens de couplage de boîtier (12) supérieurs qui comportent en particulier un élément de verrouillage (13) logé de manière mobile et qui sont réalisés afin de fournir dans un état, dans lequel un corps en forme de caisse (14) est empilé sur le boîtier (3), un couplage résistant à la traction verticalement, détachable avec le corps en forme de caisse (14).

3. Pré-séparateur à cyclone (1) selon la revendication 2, **caractérisé en ce que** le boîtier (3) dispose d'un couvercle retirable et/ou pivotant (15) qui libère dans une position ouverte un accès à l'unité de cyclone (4).

4. Pré-séparateur à cyclone (1) selon la revendication 3, **caractérisé en ce que** les moyens de couplage de boîtier (12) supérieurs comportent un verrou rotatif (16) qui est agencé au niveau du couvercle (15) et qui est réalisé non seulement pour le verrouillage du couvercle (15) mais aussi pour la fourniture du couplage avec le corps en forme de caisse (14).

5. Pré-séparateur à cyclone (1) selon l'une quelconque des revendications 2 à 4, **caractérisé en ce que** les moyens de couplage de boîtier (11) inférieurs comportent au moins un élément de verrouillage (17) logé de manière mobile et de préférence sont prévus au niveau des côtés longitudinaux du boîtier (3).

6. Pré-séparateur à cyclone (1) selon l'une quelconque des revendications 2 à 5, **caractérisé en ce que** le raccord de tuyau d'entrée d'air (9) et le raccord de tuyau de sortie d'air (10) sont agencés au niveau d'un des côtés périphériques (20), en particulier au niveau d'un côté frontal, du boîtier (3).

7. Pré-séparateur à cyclone (1) selon l'une quelconque des revendications 2 à 6, **caractérisé en ce que** le pré-séparateur à cyclone (1) présente une prise femelle (22) et/ou le boîtier (3) présente un évidement de prise femelle (23) pour la réception d'un insert de prise femelle (24).

8. Pré-séparateur à cyclone (1) selon l'une quelconque des revendications 2 à 7, **caractérisé en ce qu'**une rigole (25) est prévue au niveau du côté inférieur (7) du pré-séparateur à cyclone (1), laquelle s'étend le long du bord extérieur (26) du côté inférieur (7) et est réalisée pour la réception du bord extérieur (27) du récipient collecteur de particules (7).

9. Pré-séparateur à cyclone (1) selon l'une quelconque des revendications 2 à 8, **caractérisé par** une poignée de transport (28) en forme d'étrier qui est agencée au niveau du côté supérieur (29) du boîtier (3).

10. Agencement (30, 40) d'un récipient collecteur de particules (2) et d'un pré-séparateur à cyclone (1) placé sur le récipient collecteur de particules (2) selon l'une quelconque des revendications 2 à 9, dans lequel le récipient collecteur de particules (2) présente une section transversale horizontale se rétrécissant vers son fond de récipient (31) de sorte que le récipient collecteur de particules (2) puisse être empilé dans un récipient collecteur de particules identique, et le fond de récipient (31) est configuré de telle manière que l'agencement (30) puisse être déposé de manière stable avec le fond de récipient (31) sur une base plane.

11. Agencement (40) selon la revendication 10, **caractérisé en ce que** l'agencement (40) présente un dispositif d'aspiration (41) qui dispose sur son côté supérieur (42) d'un logement de récipient (43) avec une section transversale horizontale se rétrécissant vers le fond de réception (44), dans lequel le récipient collecteur de particules (2) est inséré dans le logement de récipient (43) et le raccord de tuyau de sortie d'air (10) est relié par le biais d'un tuyau (45) à un raccord d'aspiration (46) du dispositif d'aspiration (41).

12. Agencement (40) selon la revendication 10 ou 11, **caractérisé en ce que** l'agencement (40) comporte de plus un appareil d'aspiration (79) et un outil électrique (47) et le pré-séparateur à cyclone (1) dispose d'une prise femelle (22), dans lequel l'outil électrique (47) est raccordé à la prise femelle (22) et la prise femelle (22) est raccordée par le biais d'un câble de raccordement (48) à l'appareil d'aspiration (79), et l'appareil d'aspiration (79) est réalisé afin de détecter une commutation de l'outil électrique (47) et de commencer à aspirer en réponse à celle-ci.

13. Agencement (50) composé d'un cadre adaptateur (51) et d'un pré-séparateur à cyclone (1) placé sur le cadre adaptateur (51) selon l'une quelconque des revendications 2 à 9, **caractérisé en ce que** le cadre adaptateur (51) dispose d'un logement de récipient (43) avec une section transversale horizontale se rétrécissant vers le fond de réception (44) ainsi que de moyens de couplage de cadre adaptateur (52) supérieurs qui fournissent un couplage résistant à la traction verticalement, détachable avec le pré-séparateur à cyclone (1) et de moyens de couplage de cadre adaptateur (53) inférieurs qui sont réalisés afin de fournir dans un état, dans lequel le cadre adaptateur (51) est agencé sur un corps, en particulier un appareil d'aspiration (41), un couplage résistant à la traction verticalement, détachable avec le corps.

14. Agencement (60) comprenant un pré-séparateur à cyclone (1) selon l'une quelconque des revendications 2 à 9, ainsi qu'au moins un corps en forme de caisse (14) qui est agencé sur le pré-séparateur à cyclone (1) afin de former conjointement avec le pré-séparateur à cyclone (1) une pile verticale sensiblement carrée, dans lequel le corps en forme de caisse (14) dispose de moyens de couplage de corps (61) qui coagissent avec les moyens de couplage de boîtier (12) supérieurs afin de fournir un couplage résistant à la traction verticalement, détachable entre le corps en forme de caisse (14) et le pré-séparateur à cyclone (1).

15. Agencement (60) selon la revendication 14, **caractérisé en ce que** corps en forme de caisse (14) présente un dispositif d'aspiration (62) et un raccord d'aspiration (63).
